# EUROPEAN PATENT SPECIFICATION

(11) **EP 1 335 617 B1**
(45) Date of publication and mention of the grant of the patent: **01.08.2007**
(21) Application number: 02290345.4
(22) Date of filing: 12.02.2002
(51) Int. Cl.: H04Q 7/36, H04B 17/00

(54) **Method of simulating realistic operating conditions of a telecommunication system**
Verfahren zur Simulierung von realistischen Betriebszuständen eines Telekommunikationssystems
Procédé de simulation des conditions de fonctionnement réalistes d' un système de télécommunication

(43) Date of publication of application: 13.08.2003
(73) Proprietor: Mitsubishi Electric Information Technology Centre Europe B.V., 1119 NS Schiphol Rijk (NL)
(72) Inventor: Voyer, Nicolas, Mitsubishi Electric ITE, Immeuble, 35700 Rennes (FR); De Rick, Francois, Mitsubishi Electric ITE, Co-smes, 35700 Rennes (FR)
(74) Representative: Maillet, Alain

(56) References cited:
- US-A- 5 561 841

## Description

The present invention relates to a method of simulating operating conditions of a telecommunication system including at least two radio base stations and two mobile transceivers forming together a communication network.

Such methods are currently used for optimizing, before actual physical implementation of a telecommunication system, a deployment of radio base stations included in said system and a design of a decision-making network infrastructure which is intended to manage said network, in order to define a system able to provide optimal communication service at the lowest possible cost.

Some simulation methods, known as mapping methods and currently used for optimizing GSM-type telecommunication systems, which systems are often referred to as 2G (standing for second generation) systems, generate maps showing geographical coverage areas, each area forming a cell associated to a single base station, which map enables to assess the coverage of the system, following the general principle that if a mobile transceiver is located within a cell and if the associated base station is not saturated, said mobile transceiver will be provided with a satisfactory communication service.

An assessment of quality of service in UMTS-type telecommunication systems, often referred to as 3G (standing for third generation) systems, cannot be accurately obtained by means of a method as described above, mainly because 3G systems do not perform a frequency planning as is done in 2G systems, where to two different mobile transceivers located in a same geographical area are allocated two different communication frequencies, so as to minimize interference between said users. In 3G systems, no such frequency planning is performed, so that communication interference between mobile transceivers can and will occur, which will adversely affect the quality of each ongoing communication to an extent which varies from one user to another according to the specific situation of each user, which extent cannot be predicted by means of the above-mentioned described methods.

A prior art simulation technique is disclosed in US 5.561.841.

Another known simulation method, usually referred to as Monte-Carlo method, mainly consists in generating a plurality of snapshots, each being descriptive of a predetermined, random-generated situation of the system. Each snapshot then shows the location of all mobile transceivers of the system in the corresponding situation, the base stations with which said users are communicating, and a level of power each mobile transceiver is applying to its ongoing communication, which enables to deduce the amount of interference said user generates for other users located in his vincinity, and thus the extent to which interference generated by other users adversely affects each single user in each random-generated situation. The operation of such a method is described, among others, in European Patent Application EP 1 148 658 A1.

The Monte-Carlo method hence enables to establish, for each random-generated situation, the number of mobile transceivers to which a satisfactory communication service is provided, and enables statistical assessment of the overall communication quality offered by the simulated system.

The usefulness of the Monte-Carlo method is, however, impaired by the following problems:

Since this method performs a statistical analysis of the simulated system, a great number of snapshots is required for said analysis to be reliable. Huge computing resources will thus be required for analyzing situations which, being generated randomly, will often be inconsistent with each other. A set of such situations, analysed as forming a whole, will thus not be representative of realistic evolutions in the operating conditions of the simulated system. This problem will become all the more sensitive as the number of simulated users and the size of the system are important, for example in simulations involving tens of thousands of users and hundreds of base stations.

Furthermore, though the Monte-Carlo method enables an overall assessment of average communication quality provided by the simulated 3G system by taking into account, among other parameters, interference generated by said users and the adverse effect of said interference on ongoing communications in each random-generated situation, the Monte-Carlo method does not enable to monitor individual communications from their beginnings to their conclusions in order to assess the quality of the service provided to, and perceived by individual users, which is the ultimate assessment criterion, since one of the main goals of system simulation is to help define a system which will match the needs of its users in order to achieve customer satisfaction.

It should also be noted that the Monte-Carlo method doesn't enable to take into account a dynamic behaviour of the telecommunication system. Indeed, each snapshot generated while using a Monte-Carlo method depicts a frozen system in which each mobile transceiver communicates with the radio station offering the best communication quality, regardless of the dynamic conditions of said mobile transceiver. In a real deployment of the simulated system, a mobile transceiver sharing a communication link with a first radio station and subjected to movement may be briefly put in a situation in which a second, e.g. closer, radio station would appear to offer a better communication link. In such a situation, the mobile transceiver will issue towards the first radio station a handover request aiming at being put into communication with the second radio station. By the time such a request is processed and granted by the managing infrastructure, the first radio station may again be the one offering the best communication link, as could be the case if, for example, the mobile transceiver was moving down a first street in which the first radio station is located, which first street would cross a second one in which the second radio station is located. The mobile transceiver, when passing the intersection between the first and second streets, may send a handover request towards the first radio station, which handover request may interfere with ongoing communications between the second radio station and other mobile transceivers linked to said second radio station, and become assigned to this second radio station, but only after having crossed the intersection and being again moving along the first street while being shielded from the second radio station, in which situation the first radio station offers the best and maybe only possible communication link, which may thus result in communication loss for the mobile transceiver. Such a chain of events, known as "street corner effect" cannot be simulated by means of the Monte-Carlo method, which assigns to each mobile transceiver a radio base station which seemingly offers the best communication link only on the basis of the instantaneuous position of said mobile transceiver.

The present invention aims at solving the above-mentioned problems, by providing a method of simulating operating conditions of a telecommunication system, which method requires less computing power than the Monte-Carlo method and allows a more realistic assessment of the quality of the service provided to individual users of the system.

To this end, according to a software-oriented aspect of the invention, a method of simulating operating conditions of a telecommunication system as described in the opening paragraph includes:
. a first series of steps intended to simulate movements and ongoing communications of said mobile transceivers according to a given set of operating conditions of the radio base stations and transceivers, and
. a second series of steps intended to update said given set of operating conditions of the radio base stations and transceivers with respect to said simulated movements and ongoing communications of said mobile transceivers,
in which the first and second series of steps are executed asynchronously with respect to each other.

The fact that the first series of steps simulates the actual behaviour of mobile transceivers, like the movements and ongoing communications thereof, enables to reduce the number of generated situations to those who are consistent with each other and thus realistic, which in turn enables to reduce the amount of computing power required for carrying out the simulation method according to the invention with respect to, for example, the Monte-Carlo method. This advantage of the invention is crucial when large systems, including for example hundreds of base stations and tens of thousands mobile transceivers, are to be simulated. The execution of the first series of steps provides a historical view of the operating conditions of the simulated system, and hence enables to follow the evolution over time of individual communications, from their beginnings to their conclusions, which in turn enables to assess the quality of the service provided to individual users. This historical view also enables to simulate processes which can only be monitored over time, such as dynamic code allocation defining telecommunications channels, which allocation must continuously be updated in order to adapt the resources of the system to the needs of its users.

Furthermore, the fact that, according to the invention, the first series of steps may be executed regardless of the execution of the second series of steps enables to simulate the inertia of the system, i.e. to depict the evolution of mobile transceivers which, subjected to predefined movements and placed in a given set of operating conditions, have emitted a request for a change in said operating conditions, and continue to evolve in said conditions while awaiting the requested change.

In an embodiment of the invention, a simulation method as described above further includes at least one interrupting step for interrupting the second series of steps in order to enable data generated by the first series of steps to be taken into account by the second series of steps.

This interrupting step enables data produced by the first and second series of steps to be exchanged and taken into account by each other, without creating a timing dependency between said first and second series.

In a specific embodiment of the invention, the interruption step is triggered when, in the course of the execution of the first series of steps, a change of its operating conditions is required by one of the mobile transceivers.

This embodiment enables to use an existing functionality of the simulation method to trigger a communication between the first and second series of steps. The first series of steps may, for example, exhibit an interruption request when a mobile transceiver requests an addition or deletion of a given radio base station to or from an active set of stations it continuously maintains according to a 3GPP standard specification applicable to the simulated 3G system.

According to one of its hardware-oriented aspects, the invention also relates to a simulation device for simulating operating conditions of a telecommunication system including at least two radio base stations and two mobile transceivers forming together a communication network, said method including:
. a simulation module intended to simulate movements and ongoing communications of said mobile transceivers according to a given set of operating conditions of the radio base stations and transceivers, and
. a management module intended to update said given set of operating conditions of the radio base stations and transceivers with respect to said simulated movements and ongoing communications of said mobile transceivers,
in which the simulation and management modules operate asynchronously with respect to each other.

As explained hereinbefore, the fact that the simulation module simulates the actual behaviour of mobile transceivers, like the movements and ongoing communications thereof, enables to reduce the number of generated situations to those who are consistent with each other and thus realistic, which in turn enables to reduce the amount of computing power required for operating the simulation device according to the invention.

Moreover, the fact that, according to the invention, the simulation and management modules operate asynchronously with respect to each other enables to simulate the inertia linked to the decision process involved in the management of the telecommunication system.

In a specific embodiment of this simulation device, the simulation module advantageously includes :
. scenario generating means for computing the position of each mobile transceiver according to a predefined trajectory said mobile transceiver is intented to follow,
. transceiver simulation means for emulating signals transmitted or received by each of said mobile transceivers, and computing an amount of power exhibited by signals transmitted by each mobile transceiver, and
. base station simulation means for emulating signals transmitted or received by each radio base station and radio links between said radio base stations and transceivers, and computing an amount of power exhibited by signals transmitted by each radio base station.

According to one of its user-oriented aspects, the invention also relates to the use of a simulation device as described hereinbefore for testing a radio network controlling unit intended to manage ongoing communications between mobile transceivers and radio base stations in an actual deployment of a telecommunication network, said use essentially consisting in substituting said radio network controlling unit for the management module.

This aspect of the invention enables testing of a manufactured radio network controller, which will have been designed and built for the purpose of managing a telecommunication system whose behaviour will be realistically simulated by virtue of the invention. The invention thus enables to validate such a design without requiring to actually build the whole telecommunication system to this aim. This user-oriented aspect of the invention likewise allows to test decision-making algorithms included in a management module which would be provided by a user of the simulation device and be substituted for the internal management module described above.

According to another of its user-oriented aspects, the invention also relates to the use of a simulation device as described hereinbefore for testing a radio base station intended to be included in the simulated telecommunication network when actually deployed, said use essentially consisting in connecting said radio base station to the base station simulation means.

The invention thus enables to validate the design of a radio base station before its actual deployment in the field.

The characteristics of the invention mentioned above, as well as others, will emerge more clearly from a reading of the following description given in relation to the accompanying figures, amongst which:
Fig. 1 is a functionnal diagram which depicts a simulation device using a method according to the invention,
Fig.2 is a schematic showing, on a same picture, successive snapshots obtained by means of a simulation method according to the invention,
Fig.3 is a functional diagram which depicts a possible use of a simulation device according to the invention, and.

Fig.4 is a functional diagram of a simulation module included in a simulation device according to a specific embodiment of the invention.

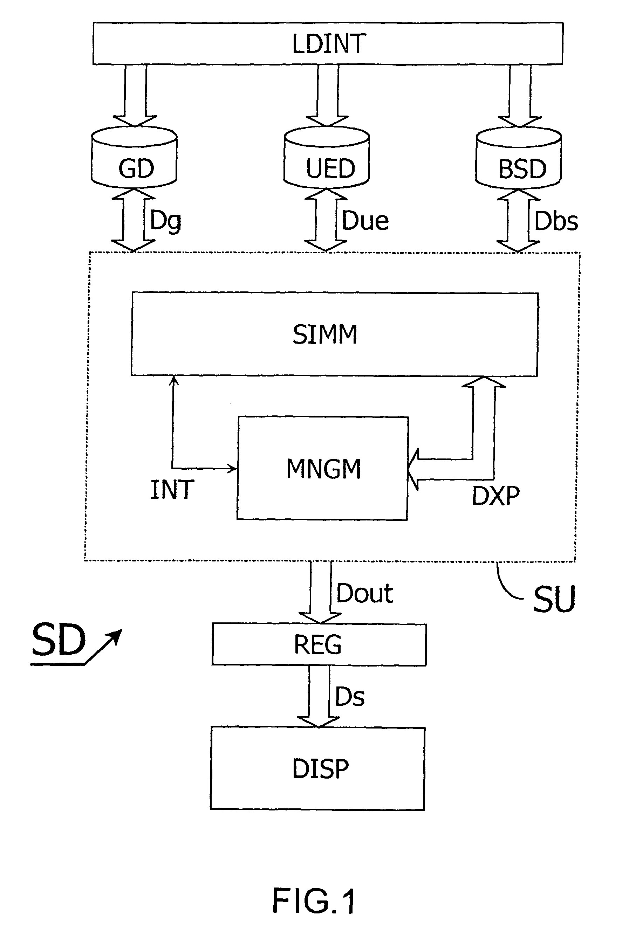

Fig.1 diagrammatically shows a simulation device SD intended to simulate operating conditions of a telecommunication system, in which a method according to the invention is used. This device SD includes a first database GD, intended to store geographical data pertaining to a landscape over wich the telecommunication system is intended to be deployed, for example models of obstacles like buildings, mountains, etc. The simulation device SD further includes a second database BSD, intended to store data pertaining to radio base stations forming a network included in the system, like a geographical location of each base station, a maximum number of communications each base station is able to handle at a given instant, or a maximum transmitting power each base station is able to apply to its ongoing communications, etc. The simulation device SD also includes a third database UED, for example intended to store or generate a collection of files, each file being associated with a mobile transceiver which will appear in the course of the simulation, and containing, listed in chronological order, successive coordinates, speeds, transmission powers or data rates to be attributed to ongoing communications between each user and a base station. The first and second databases GD and BSD thus contain data of a structural nature, representative of the deployement of the radio network included in the system and of geographical constraints said network will operate under, whereas the third database UED contains dynamic data, representative of events which will happen during the operation of the system.

In this embodiment of the invention, the first, second and third databases GD, BSD and UED are intended to be loaded by a user of the simulation device SD by means of a loading interface LDINT.

The simulation device SD includes a simulation unit SU intended to process data provided by the above mentioned first, second and third databases GD, BSD and UED by means of respective data signals Dg, Dbs and Due. The simulation unit SU will generate successive snapshots of the system, by fetching for each snapshot a set of data from the first, second and third databases GD, BSD and UED, and performing a synthesis of said data by determining, among others, which mobile transceiver is in communication with which base station, the amount of power applied by each user to its ongoing communication and/or the amount of interference generated by each user and its adverse effects on communications of other users. The third database UED may be arranged so as to provide, among other correlating parameters, instantaneous values of specified datarates for the various communications supported by the system at the corresponding instants, in which case the simulation unit SU will determine an amount of power which must be applied to each mobile transceiver's ongoing communication for ensuring that the corresponding specified datarate is respected, and an interference level linked to this amount of power. In another possible embodiment, the third database UED will provide a value of the power to be applied to each ongoing communication, and the simulation unit SU will only have to determine, for each snapshot, the amount of interference generated by said ongoing communications.

At the end of each snapshot-generating process, the simulation unit SU delivers a set of output data signals Dout representative of the results of the above-described synthesis to a register REG for storage pruposes, which register REG is linked to a display interface DISP intended to deliver results of the simulation to the user of the simulation device SD. The display interface DISP may be provided with means for interpreting the output data Ds, which could enable said display interface DISP to extract from said output data Ds values of a parameter representative of communication quality, like a power-to-interference ratio, to be attributed to each mobile transceiver, and for displaying such values, for example in varying colours or brightnesses on a map depicting the telecommunication system.

The invention thus enables to provide a user of the simulation device SD with a historical view of the operating conditions of the simulated system, and hence to follow the evolution over time of individual communications, from their beginnings to their conclusions, which in turn enables to assess the quality of the service provided to individual users.

In this embodiment of the invention, the simulation unit SU includes :
. a simulation module SIMM intended to execute a first series of computing steps in the purpose of simulating movements and ongoing communications of the mobile transceivers according to a given set of operating conditions of the radio base stations and transceivers, and
. a management module MNGM intended to execute a second series of computing steps in the purpose of updating said given set of operating conditions of the radio base stations and transceivers with respect to said simulated movements and ongoing communications of said mobile transceivers.

According to the invention, the simulation and management modules SIMM and MNGM operate asynchronously with respect to each other, which, as explained above, enables to simulate the inertia induced by the decision-taking process involved in an updating of the current set of operating conditions of the radio base stations and transceivers performed by the management module MNGM on the basis of stimuli provided by the simulation module SIMM.

Such stimuli are intended to be transmitted by the simulation module SIMM via a data exchange path DXP after said simulation module SIMM will have required an interruption, through an interruption path INT, of the operation of the management module MNGM. Such a solution enables each of the simulation and management modules SIMM and MNGM to operate independently with respect to each other while allowing data exchange between said modules.

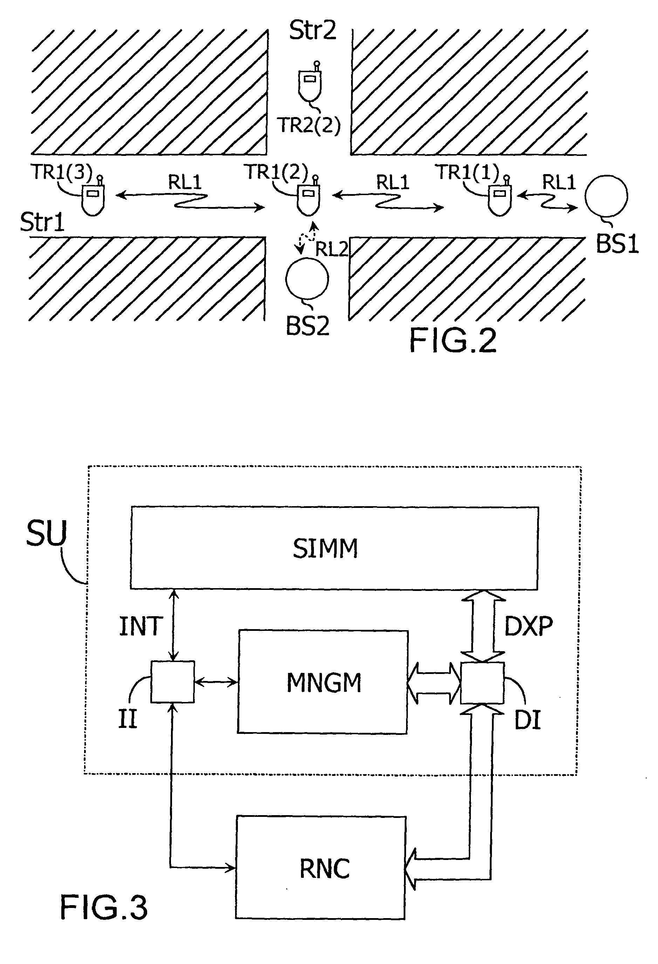

Fig.2 depicts a series of successive snapshots describing the advantages of the invention with respect to the street corner effect. A first snapshot shows a first transceiver TR1(1), which is moving down a first street Str1 and away from a first radio base station BS1 located in said first street Str1, with which said first transceiver TR1(1) is shown to be linked to said first radio base station BS1 through a first radio link RL1. The first street Str1 crosses a second street Str2 in which a second radio base station BS2 is located close to the intersection between first and second streets Str1 and Str2. A second snapshot, superimposed with the first snapshot, depicts the first transceiver TR1(2) located at the intersection between said first and second streets Str1 and Str2. In such a situation, the first transceiver TR1(2) will detect the presence of the second radio base station BS2 and identify it by means of communication quality measurements as a better choice than the first radio base station BS1, since the second radio base station BS2 is closer. The first transceiver TR1(2) will thus send towards the first radio base station BS1, with which it is still linked through radio link RL1, a handover request asking to be put in communication with the second radio base station BS2 instead of the first radio base station BS1. Since the latter is quite distant from the first transceiver TR1(2), this handover request will be emitted by using a high amount of power, which may interfere with ongoing communications between the second base station and, for example, a second transceiver TR2(2) located in this second snapshot in the second street Str2. If this simulation were run according to a known method, such as the Monte-Carlo method, i.e. without taking into account events such as handover requests and the delays between the generation of such a request and its grant, the first transceiver TR1(2) would have been automatically depicted in the second snapshot as being linked to the second base station BS2 through a second radio link RL2, shown in dashed lines on this picture, whose power would be low because of the small distance between the first transceiver TR1(2) and the second base station BS2, and thus would intefere only in a small measure with the other locally ongoing communications such as the one between the second transceiver TR2(2) and the second base station BS2. Furthermore, when, as shown in a third snapshot superimposed with the previous ones, the first transceiver TR1(3) has passed by the intersection and is again moving down the first street Str1, it is being shielded by a building from the second radio base station BS2, to which it has requested to be linked. When this request eventually becomes granted, the first transceiver TR1(3) will have to cut the first radio link RL1 and try to establish a radio link with the second radio base station BS2, which will prove difficult if not impossible in this case, and will result in a loss of communication. If this simulation were run according to a known method, the first transceiver would simply be considered linked again to the first radio base station BS1, though using a higher amount of power than in the first snapshot to maintain the first radio link RL1. The invention, by separating the simulation of the movement and ongoing communications of the first mobile transceiver, on the one hand, from the simulation of the updating of the operating conditions of the first and second radio base stations, like the processing of a handover request issued by the first mobile transceiver, on the other hand, enables a more realistic simulation of the operation of the whole telecommunication system.

Fig.3 depicts a possible use of the simulating device according to the invention, which enables to validate the design of an external radio network controller RNC. Such a controller is intended to manage the operation of a 3G system when actually deployed. A radio network controller RNC is usually build by telecommunication system manufacturers according to internal proprietary specifications which are unknown to the tester, but are intended to communicate with a 3G telecommunication network by means of messages whose format is set by the 3GPP standard specification. The simulation unit SU thus includes an interruption interface II allowing to translate messages sent by the simulation module SIMM via the interruption path INT into the suitable format specified by said 3GPP standard in order for these messages to be intelligible for the radio metwork controller RNC. The simulation unit SU further includes a data interface DI allowing to translate messages sent via the data exchange path DXP to/from the simulation module SIMM by/to the radio metwork controller RNC. Thanks to these interfaces, the radio network controller RNC may be arranged to simply shunt the management module MNGM and be substituted for it. The invention then enables to easily and realistically simulate the behaviour of such a radio network controller RNC, without requiring to actually build an entire telecommunication system to this aim.

In a similar user-oriented aspect of the invention, the simulation device may be used for testing decision-making algorithms included in an external management module which would be provided by a user of the simulation device and be substituted for the radio network controller RNC, and thus also for the internal management module MNGM.

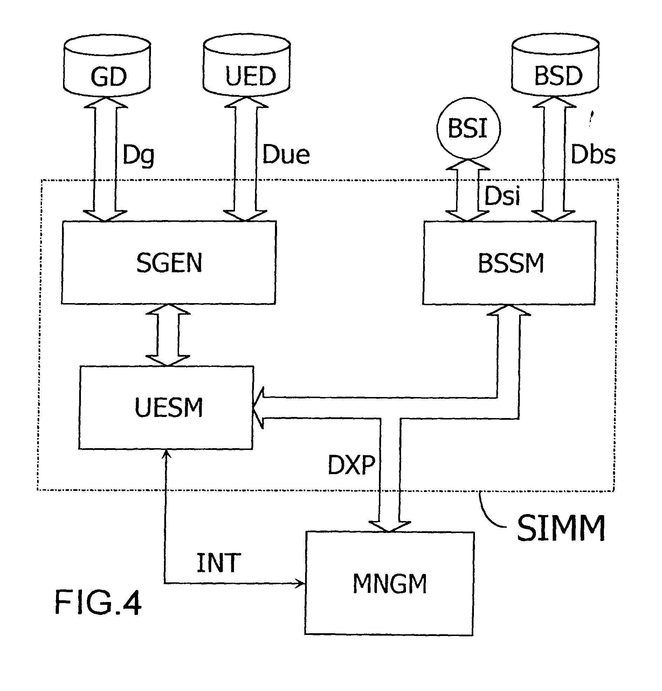

Fig.4 shows a specific embodiment of the simulation device according to the invention, in which the simulation module SIMM includes:
. scenario generating means SGEN for computing the position of each mobile transceiver according to a predefined trajectory said mobile transceiver is intented to follow,
. transceiver simulation means UESM for emulating signals transmitted or received by each of said mobile transceivers, and computing an amount of power exhibited by signals transmitted by each mobile transceiver, and
. base station simulation means BSSM for emulating signals transmitted or received by each radio base station and radio links between said radio base stations and transceivers, and computing an amount of power exhibited by signals transmitted by each radio base station.

On the basis of data signals Dg and Due provided by the first and third databases GD and UED, the scenario generating means SGEN compute, for each snapshot, the position of each mobile transceiver with respect to all other transceivers, and the amount of power involved in all ongoing communications, which will among others enable the transceiver simulation means UESM to determine the amount of interference caused by all ongoing communications to each individual ongoing communication. To this end, the scenario generating means SGEN may send to the transceiver simulation means UESM messages of the type "AddCall", "DeleteCall", "UpdateMobile" or "UpdateServiceRequest"

The transceiver simulation means UESM are able to communicate with the management module MNGM in order, for example, to request a handover for an individual or a group of mobile transceivers. Such a communication will be initiated by an interruption request sent by the transceiver simulation means UESM to the management module MNGM via an interruption path INT. An interruption request may for example be triggered when a mobile transceiver asks for a change in an active set of radio base stations it is to monitor. Such events are known as "1a", "1b" and "1c" in the 3GPP 25331 standard specification and described in paragraph 14.1.2 of said specification in its 3.9.0 version. The transceiver simulation means UESM may then send over the data exchange path DXP towards the management module MNGM an "MSMeasure Report" , thus asking for an "ActiveSetUpdate" message in return, to which the transceiver simulation means UESM will eventually answer with an "ActiveSetUpdateResp" message. Such messages may have a format akin to the RRC format defined in the 3GPP 25331 standard specification.

The transceiver simulation means UESM may also relay to the management module MNGM over the data exchange path DXP messages it received from the scenario generating means SGEN, under the form of "AddMobile", "DeleteMobile" or "ReconfService" requests having a format akin to the GPRS format defined in the 3GPP 24008 standard specification, an "AddMobile" request then corresponding to a GPRS-like "PDPContextActivationRequest", a "DeleteMobile" request to a GPRS-like "PDPContextDeactivationRequest", and a "ReconfService" request to a GPRS-like "Service" request.

In answer to stimuli received from the transceiver simulation means UESM over the data exchange path DXP by the management module MNGM, the latter may send related control signals to the base station simulation means BSSM over the data exchange path DXP, like "AddRadioLink", "DeleteRadioLink", "ReconfRadioLink" or "BSMeasureReq" instructions having a format akin to the NBAP format defined in the 3GPP 25433 standard specification.

The base station simulation means BSSM will usually operate on the basis of data Dbs provided by the second database BSD, which contains models of the various radio base stations whose deployment is to be simulated. In the example described here, however, the base station simulation means BSSM are also connected to a real radio base station BSI with which they exchange data Dsi in order to test the real behaviour of this radio base station BSI when confronted with stimuli which emulate those it will encounter during its actual deployment. This allows to validate the design of a radio base station without actually building an entire telecommunication system to this aim.

## Claims

1. A method of simulating operating conditions of a telecommunication system including at least two radio base stations (BS1, BS2) and two mobile transceivers (TR1, TR2) forming together a communication network, said method including:
. a first series of steps intended to simulate movements and ongoing communications of said mobile transceivers (TR1, TR2) according to a given set of operating conditions of the radio base stations (BS1, BS2) and transceivers (TR1, TR2), and
. a second series of steps intended to update said given set of operating conditions of the radio base stations (BS1, BS2) and transceivers (TR1, TR2) with respect to said simulated movements and ongoing communications of said mobile transceivers (TR1, TR2),
in which the first and second series of steps are executed asynchronously with respect to each other.

2. A method as claimed in claim 1, further including at least one interrupting step for interrupting the second series of steps in order to enable data generated by the first series of steps to be taken into account by the second series of steps.

3. A method as claimed in claim 2, in which an interrupting step is triggered when, in the course of the execution of the first series of steps, a change of its operating conditions is required by one of the mobile transceivers (TR1, TR2).

4. A simulation device (SD) for simulating operating conditions of a telecommunication system including at least two radio base stations (BS1, BS2) and two mobile transceivers (TR1, TR2) forming together a communication network, said method including:
a simulation module (SIMM) intended to simulate movements and ongoing communications of said mobile transceivers (TR1, TR2) according to a given set of operating conditions of the radio base stations (BS1, BS2) and transceivers (TR1, TR2), and
a management module (MNGM) intended to update said given set of operating conditions of the radio base stations (BS1, BS2) and transceivers (TR1, TR2) with respect to said simulated movements and ongoing communications of said mobile transceivers (TR1, TR2),
in which the simulation (SIMN) and management (MNGM) modules operate asynchronously with respect to each other.

5. A simulation device (SD) as claimed in claim 4, in which the simulation module (SIMM) includes :
scenario generating means (SGEN) for computing the position of each mobile transceivers (TR1, TR2) according to a predefined trajectory said mobile transceiver (TR1, TR2) is intented to follow,
transceiver simulation means (UESM) for emulating signals transmitted or received by each of said mobile transceivers (TR1, TR2), and computing an amount of power exhibited by signals transmitted by each mobile transceiver (TR1, TR2), and
base station simulation means (BSSM) for emulating signals transmitted or received by each radio base station (BS1, BS2) and radio links between said radio base stations (BS1, BS2) and transceivers (TR1, TR2), and computing an amount of power exhibited by signals transmitted by each radio base station (BS1, BS2).

6. The use of a simulation device as claimed in one of claims 4 or 5 for testing a radio network controlling (RNC) unit intended to manage ongoing communications between mobile transceivers (TR1, TR2) and radio base stations (BS1, BS2) in an actual deployment of a telecommunication network, said use essentially consisting in substituting said radio network controlling (RNC) unit for the management module (MNGM).

7. The use of a simulation device as claimed in one of claims 4 or 5 for testing a radio base station (BS1, BS2) intended to be included in the simulated telecommunication network when actually deployed, said use essentially consisting in connecting said radio base station (BS1, BS2) to the base station simulation means (BSSM).

## Patentansprüche

1. Verfahren zum Simulieren von Betriebszuständen eines Telekommunikationssystems, das wenigstens zwei Funk-Basisstationen (BS1, BS2) und zwei mobile Transceiver (TR1, TR2) enthält, die miteinander ein Kommunikationsnetzwerk bilden, wobei das Verfahren Folgendes aufweist:
. eine erste Reihe von Schritten, die zum Simulieren von Bewegungen und gerade erfolgenden Kommunikationen der mobilen Transceiver (TR1, TR2) gemäß einer gegebenen Gruppe von Betriebszuständen der Funk-Basisstationen (BS1, BS2) und der Transceiver (TR1, TR2) beabsichtigt sind; und
. eine zweite Reihe von Schritten, die zum Aktualisieren der gegebenen Gruppe von Betriebszuständen der Funk-Basisstationen (BS1, BS2) und der Transceiver (TR1, TR2) in Bezug auf die simulierten Bewegungen und gerade erfolgenden Kommunikationen der mobilen Transceiver (TR1, TR2) beabsichtigt sind;
wobei die erste und die zweite Reihe von Schritten asynchron in Bezug zueinander ausgeführt werden.

2. Verfahren nach Anspruch 1, das weiterhin wenigstens einen Unterbrechungsschritt zum Unterbrechen der zweiten Reihe von Schritten enthält, um zu ermöglichen, dass durch die erste Reihe von Schritten erzeugte Daten durch die zweite Reihe von Schritten berücksichtigt werden.

3. Verfahren nach Anspruch 2, wobei ein Unterbrechungsschritt dann ausgelöst wird, wenn im Verlauf der Ausführung der ersten Reihe von Schritten eine Änderung ihrer Betriebszustände durch einen der mobilen Transceiver (TR1, TR2) erforderlich ist.

4. Simulationsvorrichtung (SD) zum Simulieren von Betriebszuständen eines Telekommunikationssystems, das wenigstens zwei Funk-Basisstationen (BS1, BS2) und zwei mobile Transceiver (TR1, TR2) enthält, die miteinander ein Kommunikationsnetzwerk bilden, wobei die Vorrichtung Folgendes aufweist:
ein Simulationsmodul (SIMM), das zum Simulieren von Bewegungen und gerade erfolgenden Kommunikationen der mobilen Transceiver (TR1, TR2) gemäß einer gegebenen Gruppe von Betriebszuständen der Funk-Basisstationen (BS1, BS2) und der Transceiver (TR1, TR2) beabsichtigt ist; und
. ein Managementmodul (MNGM), das zum Aktualisieren der gegebenen Gruppe von Betriebszuständen der Funk-Basisstationen (BS1, BS2) und der Transceiver (TR1, TR2) in Bezug auf die simulierten Bewegungen und gerade erfolgenden Kommunikationen der mobilen Transceiver (TR1, TR2) beabsichtigt ist;
wobei das Simulations-(SIMM) und das Management-(MNGM)-Modul asynchron in Bezug zueinander arbeiten.

5. Simulationsvorrichtung (SD) nach Anspruch 4, wobei das Simulationsmodul (SIMM) Folgendes enthält:
. eine Szenario-Erzeugungseinrichtung (SGEN) zum Berechnen der Position jedes mobilen Transceivers (TR1, TR2) gemäß einer vorbestimmten Trajektorie, der der mobile Transceiver (TR1, TR2) folgen soll,
. eine Transceiver-Simulationseinrichtung (UESM) zum Emulieren von durch jeden der Transceiver (TR1, TR2) gesendeten oder empfangenen Signalen und zum Berechnen eines Betrags an Leistung, die durch Signale gezeigt wird, die durch jeden mobilen Transceiver (TR1, TR2) gesendet sind, und
. eine Basisstations-Simulationseinrichtung (BSSM) zum Emulieren von durch jede Funk-Basisstation (BS1, BS2) und Funkverbindungen zwischen den Funk-Basisstationen (BS1, BS2) und Transceivern (TR1, Tr2) gesendeten oder empfangenen Signalen und zum Berechnen eines Betrags an Leistung, die durch Signale gezeigt wird, die durch jede Funk-Basisstation (BS1, BS2) gesendet sind.

6. Verwendung einer Simulationsvorrichtung nach einem der Ansprüche 4 oder 5 zum Testen einer Funknetzwerksteuer-(RNC)-Einheit, die zum Managen gerade erfolgender Kommunikationen zwischen mobilen Transceivern (TR1, TR2) und Funk-Basisstationen (BS1, BS2) bei einem tatsächlichen Einsatz eines Telekommunikationsnetzwerks beabsichtigt ist, wobei die Verwendung im Wesentlichen in einem Einsetzen der Funknetzwerksteuer-(RNC)-Einheit für das Managementmodul (MNGM) besteht.

7. Verwendung einer Simulationsvorrichtung nach einem der Ansprüche 4 oder 5 zum Testen einer Funk-Basisstation (BS1, BS2), für die beabsichtigt ist, dass sie in dem simulierten Telekommunikationsnetzwerk enthalten ist, wenn es tatsächlich eingesetzt wird, wobei die Verwendung im Wesentlichen in einem Verbinden der Funk-Basisstation (BS1, BS2) mit der Basisstations-Simulationseinrichtung (BSSM) besteht.

## Revendications

1. Procédé de simulation de conditions de fonctionnement d'un système de télécommunication comprenant au moins deux stations radio de base (BS1, BS2) et deux émetteurs-récepteurs mobiles (TR1, TR2) formant ensemble un réseau de communication, ledit procédé comprenant :
- une première série d'étapes destinée à simuler les déplacements et les communications entrantes desdits émetteurs-récepteurs mobiles (TR1, TR2) conformément à un ensemble donné de conditions de fonctionnement des stations radio de base (BS1, BS2) et des émetteurs-récepteurs (TR1, TR2), et
- une deuxième série d'étapes destinée à mettre à jour ledit ensemble donné de conditions de fonctionnement des stations radio de base (BS1, BS2) et des émetteurs-récepteurs (TR1, TR2) par rapport auxdits déplacements et communications entrantes simulés desdits émetteurs-récepteurs mobiles (TR1, TR2),
dans lequel les première et deuxième séries d'étapes sont exécutées de façon asynchrone l'une par rapport à l'autre.

2. Procédé selon la revendication 1, comprenant en outre au moins une étape d'interruption pour interrompre la deuxième série d'étapes afin de permettre à des données générées par la première série d'étapes d'être prises en compte par la deuxième série d'étapes.

3. Procédé selon la revendication 2, dans lequel une étape d'interruption est déclenchée quand, au cours de l'exécution de la première série d'étapes, une modification de ses conditions de fonctionnement est requise par un des émetteurs-récepteurs mobiles (TR1, TR2).

4. Dispositif de simulation (SD) pour simuler des conditions de fonctionnement d'un système de télécommunication comprenant au moins deux stations radio de base (BS1, BS2) et deux émetteurs-récepteurs mobiles (TR1, TR2) formant ensemble un réseau de communication, ledit dispositif comprenant :
- un module de simulation (SIMM) destiné à simuler des déplacements et des communications entrantes desdits émetteurs-récepteurs mobiles (TR1, TR2) conformément à un ensemble donné de conditions de fonctionnement des stations radio de base (BS1, BS2) et des émetteurs-récepteurs (TR1, TR2), et
- un module de gestion (MNGM) destiné à mettre à jour ledit ensemble de conditions de fonctionnement des stations radio de base (BS1, BS2) et des émetteurs-récepteurs (TR1, TR2) par rapport auxdits déplacements et communications entrantes simulés desdits émetteurs-récepteurs mobiles (TR1, TR2), dans lequel lesdits modules de simulation (SIMM) et de gestion (MNGM) fonctionnent de manière asynchrone l'un par rapport à l'autre.

5. Dispositif de simulation (SD) selon la revendication 4, dans lequel le module de simulation (SIMM) comprend :
- des moyens générant un scénario (SGEN) permettant de calculer la position de chaque émetteur-récepteur mobile (TR1, TR2) conformément à une trajectoire prédéfinie que ledit émetteur-récepteur (TR1, TR2) doit suivre,
- des moyens de simulation d'émetteur-récepteur (UESM) permettant de faire l'émulation de signaux émis ou reçus par chacun desdits émetteurs-récepteurs mobiles (TR1, TR2), et permettant de calculer une quantité de puissance affichée par les signaux émis par chaque émetteur-récepteur mobile (TR1, TR2), et
- des moyens de simulation de station de base (BSSM) permettant de faire l'émulation de signaux émis ou reçus par chaque station radio de base (BS1, BS2) et des liaisons radio entre lesdites stations radio de base (BS1, BS2) et lesdits émetteurs-récepteurs (TR1, TR2), et permettant de calculer une quantité de puissance affichée par les signaux émis par chaque station radio de base (BS1, BS2).

6. Utilisation d'un dispositif de simulation selon l'une quelconque des revendications 4 ou 5 pour tester une unité de commande de réseau radio (RNC) destinée à gérer les communications entrantes entre des émetteurs-récepteurs mobiles (TR1, TR2) et des stations radio de base (BS1, BS2) suivant un déploiement réel d'un réseau de télécommunication, ladite utilisation consistant à remplacer ladite unité de commande de réseau radio (RNC) par le module de gestion (MNGM).

7. Utilisation d'un dispositif de simulation selon l'une quelconque des revendications 4 ou 5 pour tester une station radio de base (BS 1, BS2) à inclure dans le réseau de télécommunication simulé quand il est réellement déployé, ladite utilisation consistant essentiellement à connecter ladite station radio de base (BS1, BS2) aux moyens de simulation de station de base (BSSM).
